Europäisches Patentamt

European Patent Office

Office européen des brevets

(19)

(11) Veröffentlichungsnummer: **0 003 533**
**B1**

(12)  **EUROPÄISCHE PATENTSCHRIFT**

(45) Veröffentlichungstag der Patentschrift:
04.11.81

(21) Anmeldenummer: **79100220.7**

(22) Anmeldetag: **26.01.79**

(51) Int. Cl.³: **F 16 D  3/76,** F 16 D  3/52

(54) **Kupplung zur schwingungshemmenden Übertragung von Drehmomenten.**

(30) Priorität: **15.02.78  DE 2806349**
**15.02.78  DE 2806350**

(43) Veröffentlichungstag der Anmeldung:
**22.08.79 Patentblatt 79/17**

(45) Bekanntmachung des Hinweises auf die Patenterteilung:
**04.11.81 Patentblatt 81/44**

(84) Benannte Vertragsstaaten:
**DE FR GB NL SE**

(56) Entgegenhaltungen:
**DE-A-1 475 339**
**DE-A-2 318 612**
**DE-A-2 626 414**
**DE-A-2 657 527**

(73) Patentinhaber: **Chivari, Ilie, Berliner Strasse 1,**
**D-4690 Herne 2 (DE)**

(72) Erfinder: **Chivari, Ilie, Berliner Strasse 1,**
**D-4690 Herne 2 (DE)**

(74) Vertreter: **Behrendt, Arne, Dipl.-Ing, Am**
**Waldschlösschen 11, D-4630 Bochum-Weltmar (DE)**

BUNDESDRUCKEREI BERLIN

## Kupplung zur schwingungshemmenden Übertragung von Drehmomenten

Die Erfindung betrifft eine Kupplung zur schwingungshemmenden Übertragung von Drehmomenten, enthaltend ein erstes Kupplungsglied, ein dazu gleichachsiges zweites Kupplungsglied, wenigstens ein als gesonderter Bauteil ausgebildetes, elastisch verformbares Zwischenglied, über welches die Kupplungsglieder miteinander verbunden sind und Verbindungsmittel, welche flexible Elemente enthalten, mit den Kupplungsgliedern verbunden und in Schlaufen um das Zwischenglied herumgeführt sind, welche das Zwischenglied formschlüssig so halten, daß sie bei einer relativen Winkelbewegung der Kupplungsglieder das Zwischenglied durch Druckbelastung elastisch verformen.

Eine solche Kupplung ist beispielsweise bekannt durch die DE-A-2 318 612. Bei dieser bekannten Kupplung besteht das Zwischenglied aus einem zweiteiligen Gummikörper von torischer Grundform, der zwischen einem ringförmigen äußeren Kupplungsglied und einem nabenartigen inneren Kupplungsglied angeordnet und mit beiden Kupplungsgliedern durch Vulkanisieren fest verbunden ist. Der Gummikörper bildet einen Hohlraum, in den Druckluft einleitbar ist. Die Seile sind in den Gummikörper einvulkanisiert.

Durch die DE-A-2 626 414 ist eine Kupplung zur schwingungshemmenden Übertragung von Drehmomenten bekannt, bei der ein als formbeständiger Gummiteil ausgebildetes Druckkissen, das im Längsschnitt U-förmig ist und einen zur Atmosphäre hin offenen, mantelförmigen Ringraum bildet, zwischen einem inneren und einem dazu im wesentlichen konzentrischen äußeren Kupplungsglied angeordnet ist. Dabei bildet das Druckkissen beiderseits des Ringraums zwei ringförmige Stirnflächen, die mit dem inneren bzw. dem äußeren Kupplungsglied durch Vulkanisieren verbunden sind. Seile sind in den beiden Kupplungsgliedern verankert und in Schlaufen um den Gummiteil herumgelegt. Bei einer Relativverdrehung der Kupplungshälften werden die Schlaufen in axialer Richtung verkürzt und üben eine Druckbelastung auf den Gummikörper aus, durch welche dieser verformt wird. Die Kupplungshälften sind so elastisch miteinander verbunden, wobei die Elastizität durch die Druckbelastung des Gummikörpers erzielt wird.

Der Erfindung liegt die Aufgabe zugrunde, eine Kupplung der eingangs definierten Art so auszubilden, daß die Herstellung vereinfacht wird und ein Austausch des Zwischenglieds möglich ist, ohne die übrigen Bauteile der Kupplung zu demontieren.

Erfindungsgemäß wird diese Aufgabe dadurch gelöst, daß das Zwischenglied mit Abstand zu jedem der Kupplungsglieder zwischen den Kupplungsgliedern angeordnet ist und die Verbindungsmittel in einer das Zwischenglied formschlüssig und lösbar zwischen den Schlaufen haltenden Weise zu dem Zwischenglied angeordnet sind.

Bei der erfindungsgemäßen Kupplung bildet das Zwischenglied einen Bauteil, der nicht an den Kupplungsgliedern fest angebracht ist, sondern nur durch die Verbindungsmittel gehalten wird. Es entfällt bei der Herstellung das Aufvulkanisieren des Zwischenglieds auf die Kupplungsglieder. Zum Ausbau des Zwischenglieds brauchen nur die Verbindungsmittel auf einer Seite von den Kupplungsgliedern gelöst und weggeklappt zu werden, um ein Herausnehmen des Zwischengliedes in axialer Richtung zu ermöglichen.

Weitere Ausgestaltungen der Erfindung sind Gegenstand der Unteransprüche.

Die Erfindung ist nachstehend an einigen Ausführungsbeispielen unter Bezugnahme auf die zugehörigen Zeichnungen näher erläutert.

Fig. 1 zeigt einen Längsschnitt durch eine erfindungsgemäße Kupplung.

Fig. 2 zeigt eine Ansicht in Axialrichtung einer Kupplung nach Fig. 1, teilweise im Schnitt.

Fig. 3 zeigt einen Längsschnitt durch eine weitere Ausführungsform einer erfindungsgemäßen Kupplung.

Fig. 4 zeigt eine Ansicht von rechts in Fig. 3.

Fig. 5 zeigt einen Längsschnitt durch eine weitere Ausführungsform einer erfindungsgemäßen Kupplung.

Fig. 6 zeigt die Ausführungsform von Fig. 5 in Axialrichtung gesehen, teilweise im Schnitt.

Fig. 7 zeigt in Axialansicht, teilweise im Schnitt, eine weitere mögliche Ausführungsform der Erfindung.

Fig. 8 zeigt einen Schnitt längs der Linie C—D von Fig. 7.

Fig. 9 zeigt einen Längsschnitt einer weiteren Ausführungsform der Erfindung, und

Fig. 10 zeigt eine Ansicht der Ausführungsform von Fig. 9 in Axialrichtung gesehen und teilweise im Schnitt.

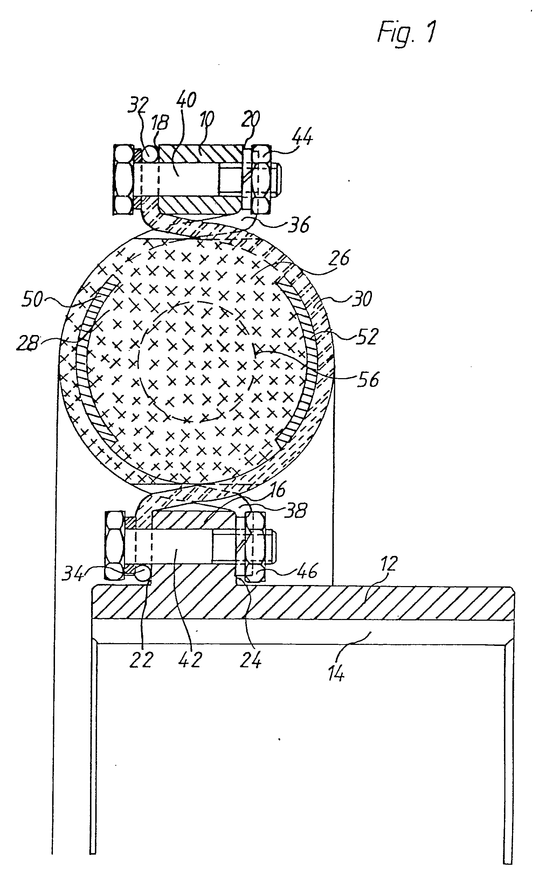

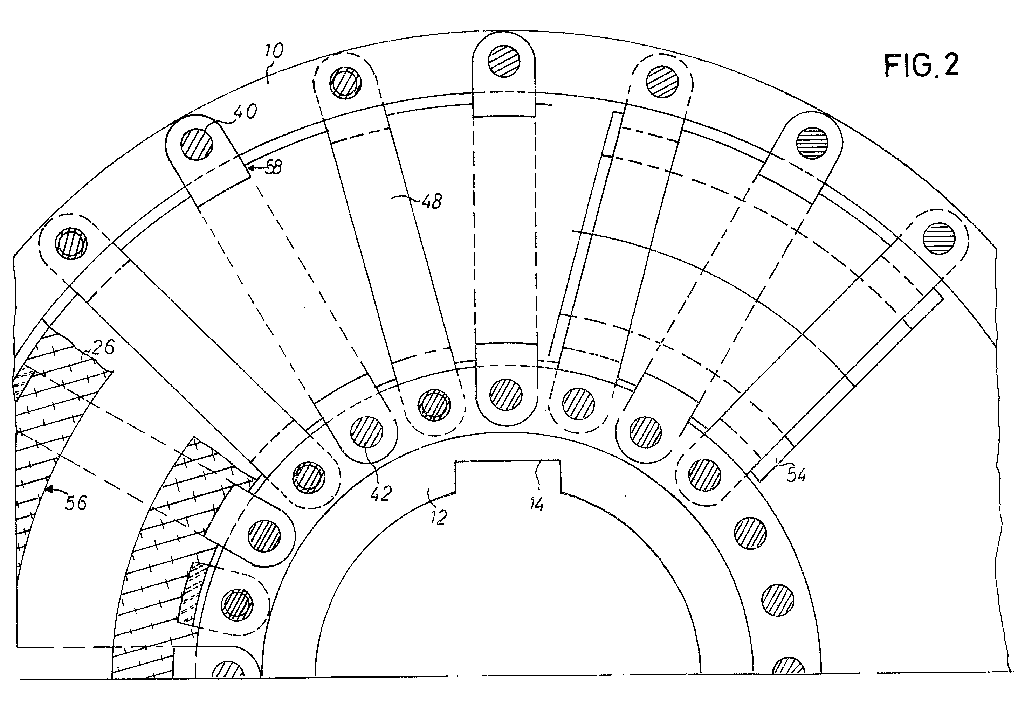

Bei der Ausführungsform nach Fig. 1 und 2 ist mit 10 ein erstes, äußeres Kupplungsglied und mit 12 ein nabenartiges inneres zweites Kupplungsglied bezeichnet. Das zweite Kupplungsglied 12 weist eine Keilnut 14 auf, mittels welcher das Kupplungsglied 12 unverdrehbar mit einer Welle verbunden werden kann. Das zweite Kupplungsglied 12 weist konzentrisch zu dem ringförmigen ersten Kupplungsglied 10 einen Radialflansch 16 auf. Das erste Kupplungsglied besitzt auf gegenüberliegenden Seiten in Axialrichtung weisende Stirnflächen 18 und 20. Der Radialflansch 16 des zweiten Kupplungsglieds 12 weist ebenfalls auf gegenüberliegenden Seiten in Axialrichtung weisende Stirnflächen 22 und 24 auf.

Zwischen dem ersten Kupplungsglied 10 und dem zweiten Kupplungsglied 12 ist ein elastisches Zwischenglied 26 angeordnet. Das Zwischenglied ist als ein von den Kupplungsgliedern 10 und 12 gesonderter Bauteil ausgeführt.

Flexible Elemente 28 und 30, z. B. Seile, die jeweils mit dem ersten und dem zweiten Kupplungsglied 10 bzw. 12 verbunden sind, sind in Längsebenen abwechselnd auf der einen und auf der anderen Seite in Schlaufen um das Zwischenglied 26 herumgeführt.

Das Zwischenglied besitzt torische Grundform. Die Seile 30 sind jeweils auf den in Fig. 1 linken Stirnflächen 18 und 22 des ringförmigen Kupplungsgliedes 10 und des Radialflansches 16 des Kupplungsgliedes 12 befestigt und auf der diesen Stirnflächen 18 und 22 abgewandten, also in Fig. 1 rechten Seite um das Zwischenglied herumgeführt. Die Seile 28 sind auf den in Fig. 1 rechten Stirnflächen 20 und 24 des Kupplungsgliedes 10 bzw. des Radialflansches 16 des Kupplungsgliedes 12 befestigt und auf der diesen Stirnflächen 20, 24 abgewandten, also in Fig. 1 linken Seite um das Zwischenglied 26 herumgeführt.

Jedes der Seile 28 und 30 ist endlos ausgebildet, d. h., die beiden Enden der Seile sind miteinander verbunden und flach zu zwei parallelen Seilabschnitten zusammengelegt. An den so entstehenden Enden wird dann je eine Befestigungsschlaufe 32, 34 bzw. 36, 38 gebildet. Diese Befestigungsschlaufen sind um Bolzen 40 bzw. 42 an dem ersten Kupplungsglied 10 bzw. dem zweiten Kupplungsglied 12 herumgeführt und zwischen den Köpfen der Bolzen 40, 42 und den Stirnflächen 18, 22 bzw. zwischen Muttern 44, 46, die auf die Bolzen 40, 42 aufgeschraubt sind, und den Stirnflächen 20, 24 festgeklemmt. Wie aus Fig. 2 am besten ersichtlich ist, sind die Seile in streifenartige Gummikörper 48 eingebettet, die sich leichter handhaben lassen und einen guten Kontakt mit dem Zwischenglied 26 gewährleisten.

Das Zwischenglied ist bei dem Ausführungsbeispiel nach Fig. 1 und 2 von einem massiven gummielastischen Körper gebildet. Beiderseits des Zwischengliedes sind an den von den Seilen umschlungenen Flächenteilen schalenförmige Stützkörper 50, 52 im Abstand voneinander angeordnet, wobei die auf der einen Seite vorgesehenen Stützkörper 50 auf Lücke zu den auf der anderen Seite vorgesehenen Stützkörpern 52 angeordnet sind und die Seile 28, 30 auf den Außenseiten der Stützkörper anliegen.

Die Seile sind somit ebenfalls von dem Zwischenglied 26 getrennt. Der das Zwischenglied 26 bildende gummielastische Körper ist wenigstens einmal im wesentlichen in einer Längsebene unterteilt. Das Zwischenglied kann aber auch, wie im rechten Teil von Fig. 2 dargestellt ist, von einer Mehrzahl getrennter gummielastischer Körper 54 gebildet werden.

Wie in Fig. 1 gestrichelt angedeutet ist und wie in der Schnittdarstellung auf der linken Seite von Fig. 2 gezeigt ist, kann der gummielastische Körper auch einen in Umfangsrichtung verlaufenden Hohlraum 56 aufweisen.

Zum Ausbauen des Zwischengliedes kann die Mutter 44 gelöst und der Bolzen 40 herausgezogen werden. Es können dann die Seile 30 nach unten geklappt werden, so daß das Zwischenglied 26 z. B. nach rechts in Fig. 1 herausgezogen werden kann. Durch die Unterteilung des Zwischengliedes kann das Zwischenglied 26 dann entfernt werden, ohne daß dies durch die Welle behindert würde.

Wie aus Fig. 2 ersichtlich ist, ist das Zwischenglied 26 mit in Radialebenen verlaufenden Umfangsnuten 58 versehen, in denen die Gummistreifen 48 geführt sind.

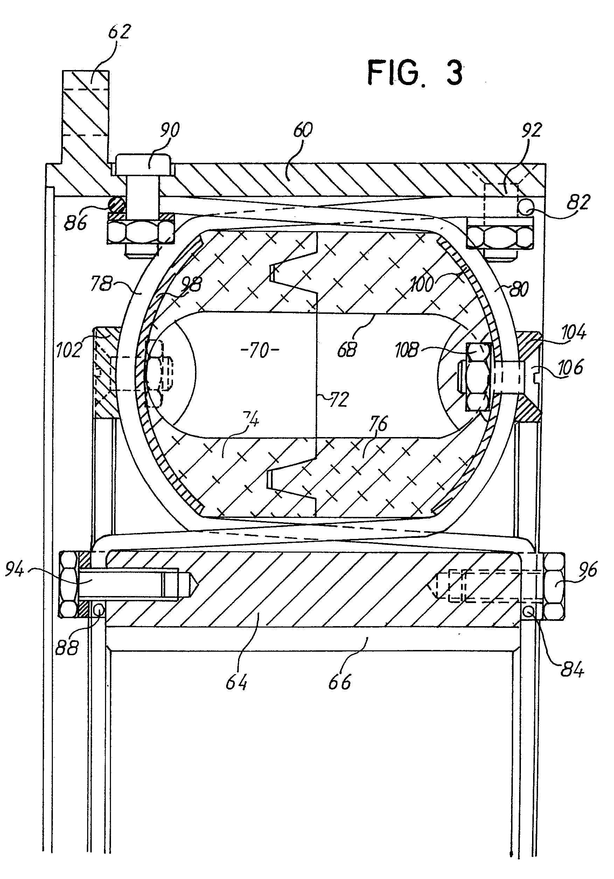

Bei der Ausführungsform nach Fig. 3 ist das erste Kupplungsglied 60 eine Hülse mit einem Radialflansch 62, mittels dessen das erste Kupplungsglied mit einer Schwungscheibe verbunden werden kann. Das zweite Kupplungsglied 64 ist eine Nabe koaxial zu der Hülse 60, die mittels einer Keilnut 66 mit einer Welle verbunden wird. Das Zwischenglied 68 ist ein gummielastischer Körper, der einen in Umfangsrichtung verlaufenden Hohlraum 70 bildet und im wesentlichen in einer Radialebene 72 geteilt ist.

Die beiden Teile 74 und 76 sind an ihren Stirnflächen, z. B. durch Verkleben, miteinander verbunden.

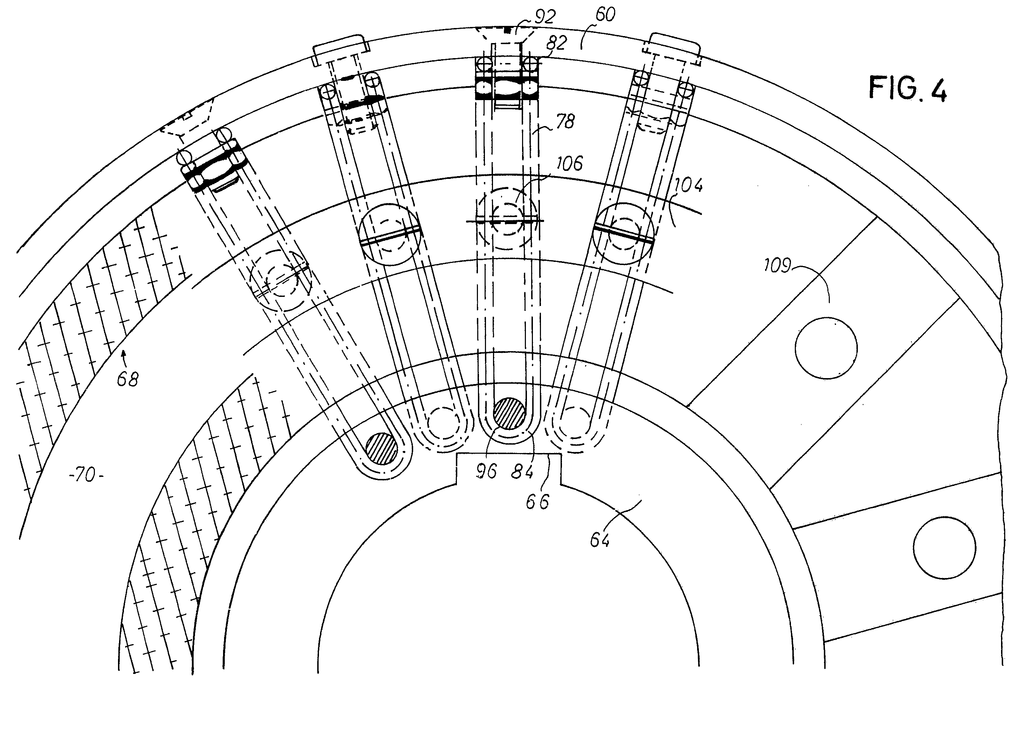

Das Zwischenglied ist ähnlich wie bei der Ausführungsform nach Fig. 1 als ein von den Kupplungsgliedern gesonderter Bauteil ausgeführt, der zwischen den Kupplungsgliedern 60 und 64 nur durch Seile 78 bzw. 80 gehalten wird, die mit den Kupplungsgliedern 60, 64 verbunden und abwechselnd auf der einen und auf der anderen Seite um das Zwischenglied 68 herumgeführt sind. Die Seile sind auch bei der Ausführungsform nach Fig. 3 und 4 endlos ausgebildet und flach zu zwei parallelen Seilabschnitten zusammengelegt, wobei an den so entstehenden Enden je eine Befestigungsschlaufe 82, 84 bzw. 86, 88 gebildet wird. Mit diesen Befestigungsschlaufen sind die Seile um radiale Bolzen 90, 92 des ersten Kupplungsglieds 60 und um axiale Bolzen 94, 96 in den Stirnflächen des zweiten Kupplungsglieds 64 herumgeführt. Dabei sind die Befestigungsschlaufen 82, 84 des auf der in Fig. 3 linken Seite des Zwischengliedes 68 herumgeführten Seils 78 an den in Fig. 3 rechts angeordneten Bolzen 92 und 96 befestigt, während die Befestigungsschlaufe 86 und 88 des in Fig. 3 auf der rechten Seite des Zwischenglieds 68 herumgeführten Seils an den Bolzen 90 und 94 auf der linken Seite in Fig. 3 angebracht sind. Auf diese Weise wird ähnlich wie bei der Ausführungsform nach Fig. 1 eine möglichst vollständige Umschlingung des Zwischengliedes und eine sichere Halterung desselben zwischen den Seilen gewährleistet. Das Zwischenglied ist, wie aus Fig. 3 ersichtlich ist, im Querschnitt langgestreckt, d. h., es besitzt zylindrische Innen- und Außenflächen und Stirnflächen, die im Querschnitt kreisförmig sind. Auf diese Weise wird der Raum zwischen dem ersten Kupplungsglied 60 und dem zweiten Kupplungsglied 64 optimal von dem Zwischenglied 68 ausgefüllt.

Beiderseits des Zwischengliedes 68 sind an den von den Seilen 78, 80 umschlungenen Stirnflächen schalenförmige Stützkörper 98, 100 angeordnet. Auch hier sind die auf der einen Seite vorgesehenen Stützkörper 98 auf Lücke zu den auf der anderen Seite vorgesehenen Stützkörpern 100 angeordnet. Die Seile 78 und 80 liegen auf den Außenseiten der Stützkörper an. Im Gegensatz zu der Ausführungsform nach Fig. 1 sind die Seile 78 und 80 bei der Ausführung nach Fig. 3 und 4 durch eine lösbare Klemmvorrichtung an den Stützkörpern festgeklemmt. Diese Klemmvorrichtungen werden von Ringen 102, 104 gebildet, die jeweils unter Zwischenlage der Seile 78 und 80 durch Schrauben 106 und Muttern 108 gegen die Stützkörper 98, 100 festgezogen werden.

Auch bei dieser Ausführung können die Seile in streifenförmige Gummikörper 109 eingebettet sein, wie in Fig. 4 im rechten Teil dargestellt ist.

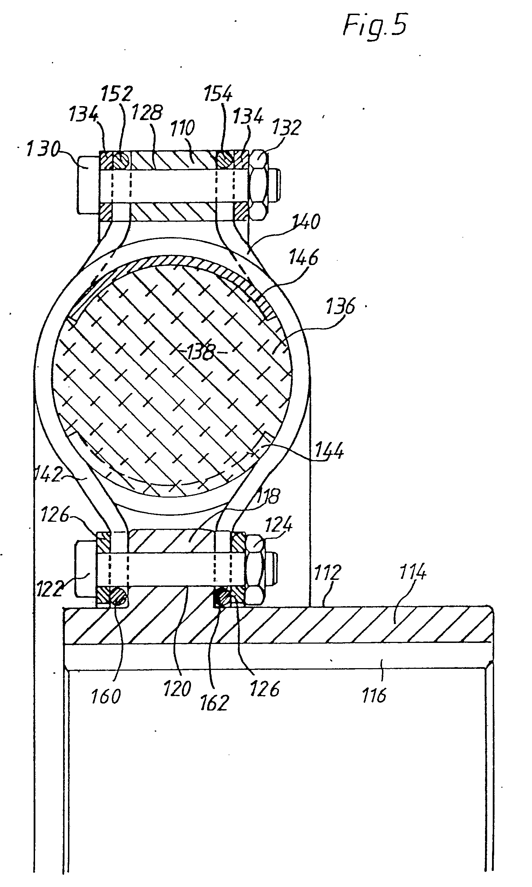

In Fig. 5 ist mit 110 ein ringförmiges äußeres Kupplungsglied und mit 112 ein inneres zweites Kupplungsglied bezeichnet. Das innere Kupplungsglied bildet eine Nabe 114, die mit einer Keilnut 116 unverdrehbar auf eine Welle aufsetzbar ist. Die Nabe 114 bildet weiterhin einen Radialflansch 118. In dem Radialflansch 118 ist ein Kranz von Axialbohrungen 120 vorgesehen, in denen Schraubbolzen 122 mit Muttern 124 und Unterlegscheiben 126 sitzen.

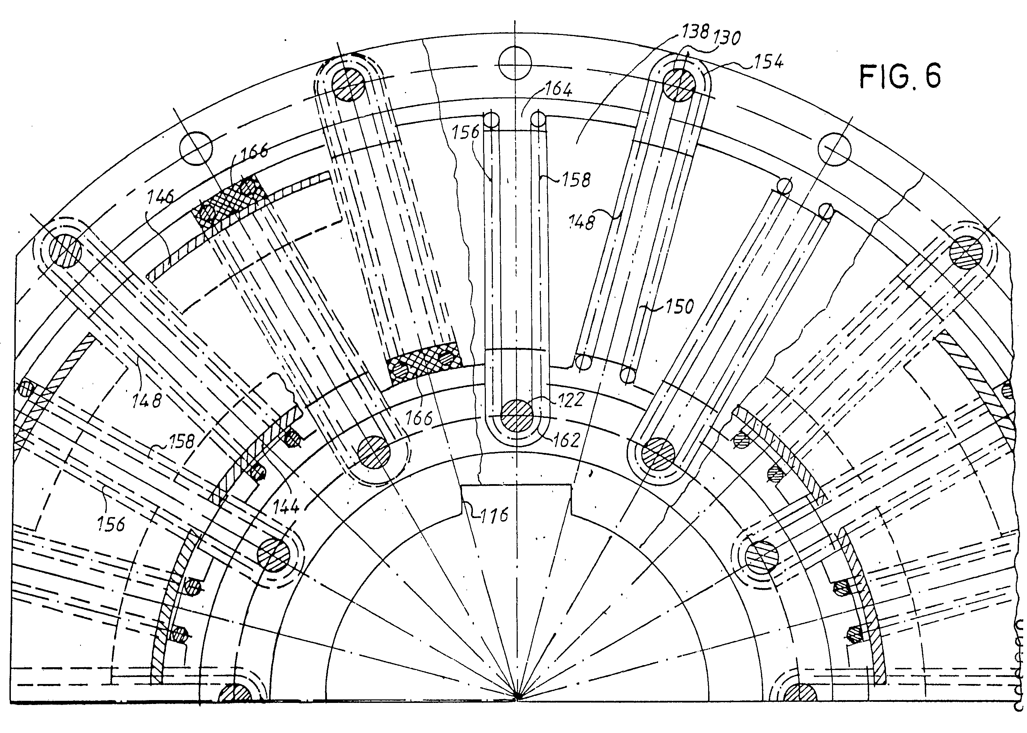

Das dazu konzentrische äußere zweite Kupplungsglied 110 weist ebenfalls einen Kranz von Axialbohrungen 128 auf, in denen Schraubbolzen 130 mit Muttern 132 und Unterlegscheiben 134 sitzen. Ein Zwischenglied 136 enthält einen Gummikörper 138 von torischer Grundform, wie am besten aus Fig. 6 ersichtlich ist. Dieser Gummikörper ist wenigstens einmal in einer Längsebene geteilt.

Das Zwischenglied 136 mit dem Gummikörper 138 wird zwischen den Kupplungsgliedern 110 und 112 durch Verbindungsmittel gehalten, die jeweils flexible aber nicht dehnbare Elemente in Form von Seilschlaufen 140 bzw. 142 und schalenförmige Stützkörper 144 bzw. 146 enthalten. Die schalenförmigen Stützkörper sind jeweils sattelförmig ausgebildet, d. h., sie sind in der Radialebene von Fig. 6 um die Umlaufachse und in der Längsebene von Fig. 5 um den Mittelpunkt des im Schnitt kreisförmigen Gummikörpers 138 gekrümmt. Die mit dem ersten Kupplungsglied 110 über die flexiblen Elemente (Seilschlaufen 140) verbundenen Stützkörper sind im Abstand voneinander auf der Innenseite des gummielastischen Körpers 138 angeordnet. Die mit dem zweiten Kupplungsglied 112 über die flexiblen Elemente (Seilschlaufen) 142 verbundenen Stützkörper 146 sind im Abstand voneinander und auf Lücke zu den mit dem ersten Kupplungsglied verbundenen Stützkörpern auf der Außenseite des gummielastischen Körpers angeordnet. Der gummielastische Körper 138 wird über die Stützkörper 144 und 146 von den Seilschlaufen 140 und 142 frei zwischen den Kupplungsgliedern 110 und 112 gehalten. Die Seilschlaufen werden, wie am besten aus Fig. 6 ersichtlich ist, von einem endlosen Seil gebildet, also einem Seil, dessen beide Enden miteinander verbunden sind. Dieses endlose Seil ist flach zu zwei parallelen Seilabschnitten 148, 150 (Fig. 6) zusammengelegt und bildet an den beiden so entstehenden Enden je eine Befestigungsschlaufe 152 bzw. 154. Die beiden parallelen Seilabschnitte 148 und 150 bilden die Seilschlaufe 140, die um den Stützkörper 144 herumgelegt ist. Der Schraubbolzen 130 erstreckt sich durch die beiden Befestigungsschlaufen 152 und 154 hindurch, die zu beiden Seiten des Kupplungsglieds 110 angeordnet sind und zwischen diesem Kupplungsglied 110 und den Unterlegscheiben 134 durch Festziehen der Mutter 132 festgeklemmt werden. In entsprechender Weise ist die Seilschlaufe 142 ebenfalls von einem endlosen Seil gebildet, das flach zu zwei parallelen Seilabschnitten 156 und 158 zusammengelegt ist und an den beiden so entstehenden Enden je eine Befestigungsschlaufe 160 bzw. 162 bildet. Die beiden parallelen Seilabschnitte 156 und 158 bilden die Seilschlaufe 142 und sind außen um den gummielastischen Körper 138 und den Stützkörper 146 herumgeführt. Der Schraubbolzen 122 erstreckt sich durch die beiden Befestigungsschlaufen 160 und 162 hindurch, die beiderseits des Radialflansches 118 angeordnet sind und durch Festziehen der Mutter 124 zwischen dem Radialflansch 118 und den Unterlegscheiben 126 festgeklemmt werden.

Wie aus Fig. 6 ersichtlich ist, sind die Stützkörper 144 und 146 in den Gummikörper 138 einvulkanisiert. Der Gummikörper 138 weist in Längsebenen verlaufende Umfangsnuten 164 auf, in denen die Seilschlaufen 140 und 142 geführt sind. Wie aus Fig. 6 ersichtlich ist, kann jedes endlose Seil im zusammengelegten Zustand durch herumgelegte Fäden gehalten werden und so in eine Gummischicht 166 einvulkanisiert sein. Die flexiblen Elemente werden dann von einem Gummistreifen gebildet, in den das endlose Seil in seiner zusammengelegten Form eingebettet ist. Auf diese Weise sind die Seile leichter zu handhaben, und ihre Anzugkraft wird gleichmäßiger auf den gummielastischen Körper 138 übertragen.

Bei einer Relativverdrehung beispielsweise des ersten Kupplungsgliedes 110 gegenüber dem festgehaltenen zweiten Kupplungsglied 112 sucht die Seilschlaufe 140 den gummielastischen Körper 138 im wesentlichen radial nach außen zu ziehen, während die Seilschlaufe 142 den gummielastischen Körper 138 im wesentlichen radial nach innen zu ziehen trachtet. Es erfolgt somit eine Drehmomentübertragung über einen elastisch deformierbaren gummielastischen Körper, der jedoch bei dieser Drehmomentübertragung über die Seile im wesentlichen nur auf Druck beansprucht wird. Es besteht keine direkte Verbindung zwischen dem ersten Kupplungsglied 110 und dem zweiten Kupplungsglied 112. Das Zwischenglied 136 mit dem gummielastischen Körper 138 ist ebenfalls an keinem der Kupplungsglieder 110, 112 unmittelbar befestigt.

Es ist daher sehr leicht, das Zwischenglied 136 mit dem Gummikörper 138 auszutauschen, beispielsweise um die Steifigkeit der Kupplung zu verändern oder um ein durch die Walkarbeit verschlissenes Zwischenglied zu ersetzen. Zu diesem Zweck brauchen nur die Muttern 124 und 132 gelöst zu werden. Die Seilschlaufen 140 und 142 werden zurückgeklappt, und das Zwischenglied 136 kann dann ohne Demontage der Kupplungsglieder 110, 112 axial herausgenommen werden. Dadurch, daß das Zwischenglied 136 wenigstens einmal in einer Längsebene geteilt ist, kann das Zwischenglied dann ohne Behinderung über die Welle herausgenommen werden.

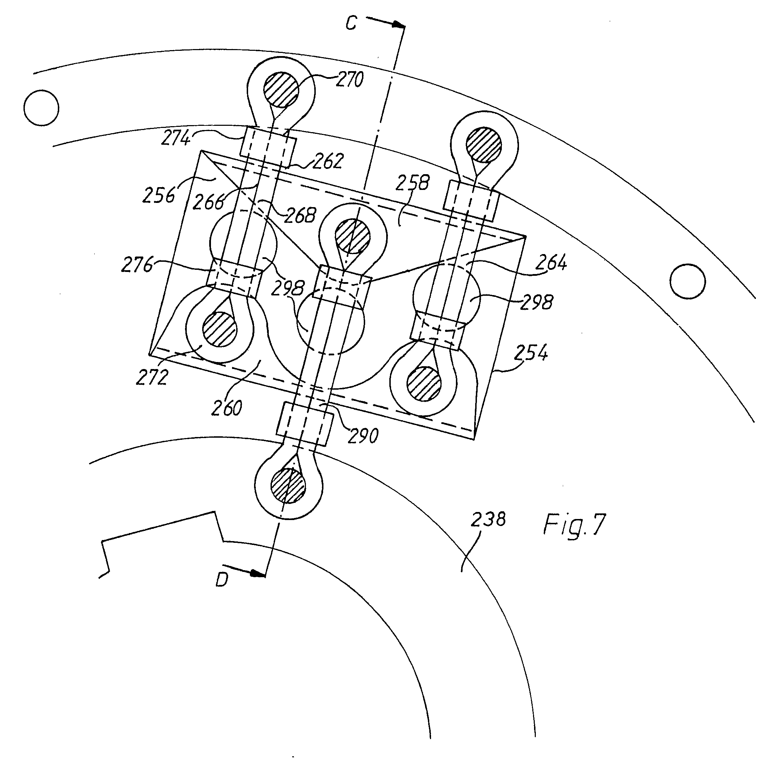

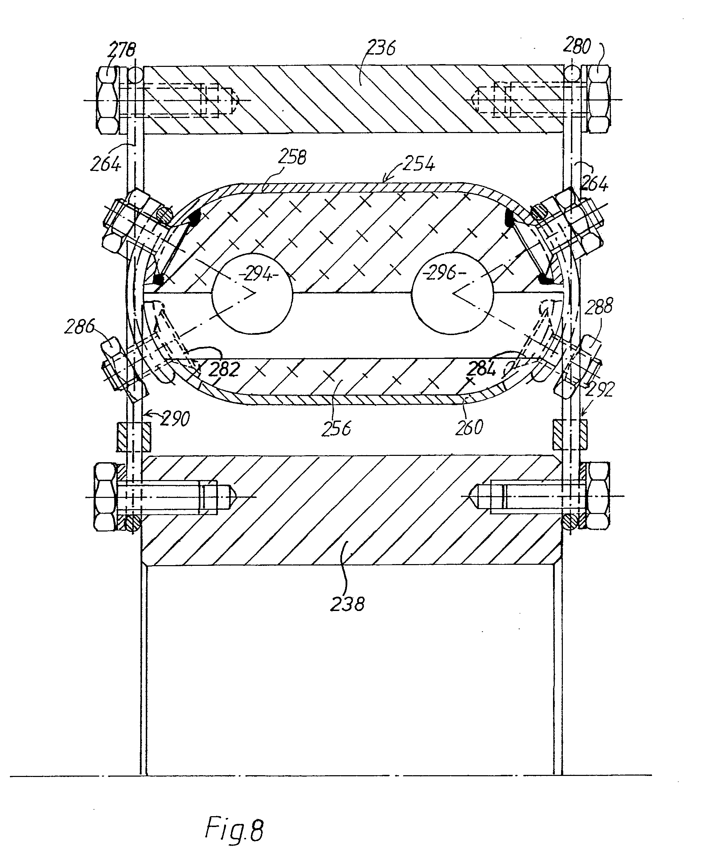

Bei der Ausführungsform nach Fig. 7, die in Fig. 8 im Längsschnitt dargestellt ist, sind zwischen den beiden Kupplungsgliedern 236 und 238 in regelmäßiger Anordnung eine Mehrzahl von Zwischengliedern 254 angebracht. Jedes der Zwischenglieder 254 besteht aus einem gummielastischen Körper 256 von ovalem Querschnitt, einem Stützkörper 258 auf der Außenseite des gummielastischen Körpers 256 und einem Stützkörper 260 auf der Innenseite des gummielastischen Körpers 256. Der Stützkörper 256 ist über zwei Paare von in den Randbereichen angeordneten flexiblen Elementen 262, 264 mit dem ersten Kupplungsglied 236 verbunden. Jedes flexible Element 262 oder 264 besteht aus einem endlosen Seil, das mit den mittleren Seilabschnitten 266, 268 parallel zusammengelegt ist und an den dadurch entstehenden Enden je eine Befestigungsschlaufe 270 bzw. 272 bildet. Anschließend an die Befestigungsschlaufen 270 und 272 sind die beiden Seilabschnitte 266 und 268 durch Klemmvorrichtungen 274, 276 zusammengehalten. Jedes der flexiblen Elemente 262 ist mit seinen Befestigungsschlaufen 270, 272 einmal durch Schrauben 278 bzw. 280 vor den Stirnflächen des Kupplungsgliedes 236 gehalten und zum anderen durch Schrauben 282, 284 und Muttern 286, 288 an dem Stützkörper 260 befestigt. Die flexiblen Elemente 264 und der Stützkörper 260 greifen somit auf der Innenseite schlaufenartig um den Gummikörper 256 herum.

In entsprechender Weise ist der äußere Stützkörper 258 über ein Paar von flexiblen Elementen 290, 292 mit dem Kupplungsglied 238 verbunden.

Der gummielastische Körper 256 weist längsverlaufende Hohlräume 294, 296 (Fig. 8) und/oder querverlaufende Hohlräume 298 auf.

Auch hier bewirkt eine Winkelverdrehung der Kupplungsglieder 236 und 238 um die Umlaufachse ein Zusammendrücken des Gummikörpers 256, so daß die Drehmomente schwingungsdämpfend über die Zusammendrückung eines Gummikörpers übertragen werden. Außerdem gestattet die Verwendung von einer Mehrzahl einzelner Zwischenglieder in regelmäßiger Anordnung einen Winkelversatz der Wellen zueinander, wobei die Zwischenglieder eine Ausgleichsbewegung ausführen.

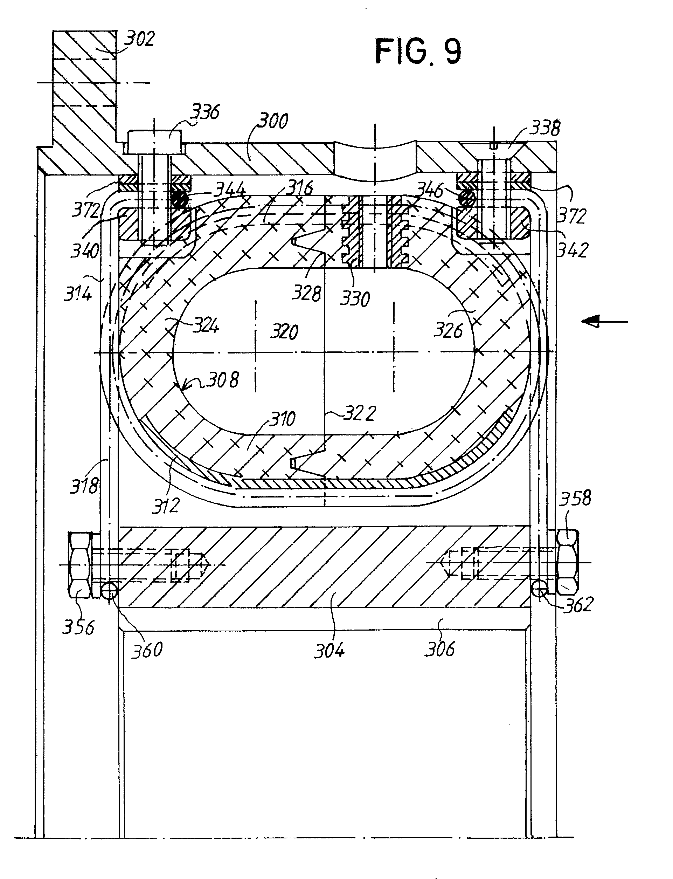

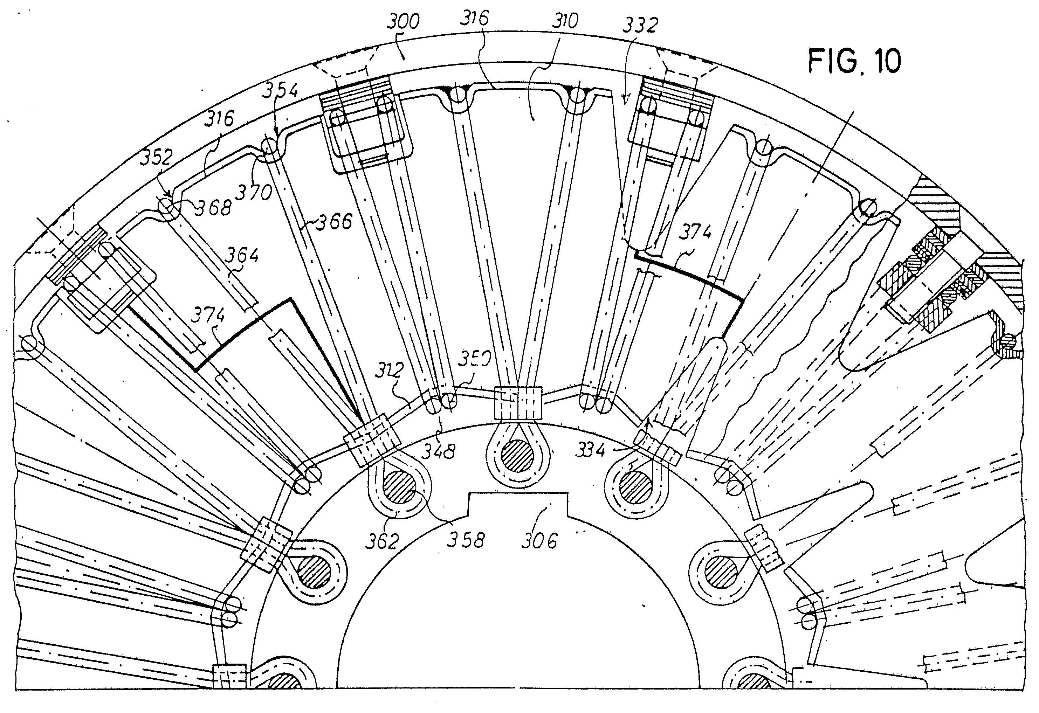

Bei der Ausführungsform nach Fig. 9 und 10 ist mit 300 ein äußeres erstes Kupplungsglied bezeichnet, daß mittels eines Flansches 302 beispielsweise an ein Schwungrad anschraubbar ist. Mit 304 ist ein nabenartiges inneres zweites Kupplungsglied bezeichnet, welches mittels einer Keilnut 306 unverdrehbar mit einer Welle verbunden werden kann. Ein Zwischenglied 308 weist einen im wesentlichen torischen gummielastischen Körper 310 auf, der zwischen dem ringförmigen oder hülsenförmigen äußeren ersten Kupplungsglied 300 und dem inneren zweiten Kupplungsglied 304 angeordnet ist. Auf der Innenseite des gummielastischen Körpers sind im Abstand voneinander Stützkörper 312 angeordnet. Diese Stützkörper 312 sind mit dem ersten Kupplungsglied 300 über flexible Elemente 314 verbunden. Auf der Außenseite des gummielastischen Körpers 310 sind im Abstand voneinander und auf Lücke zu den mit dem ersten Kupplungsglied 300 verbundenen Stützkörpern 312 weitere Stützkörper 316 angeordnet. Diese Stützkörper 316 sind mit dem zweiten Kupplungsglied 304 über flexible Elemente 318 verbunden. Die mit dem ersten Kupplungsglied 300 verbundenen flexiblen Elemente 314 und die mit dem zweiten Kupplungsglied 304 verbundenen flexiblen Elemente 318 wechseln sich in Umfangsrichtung ab.

Wie am besten aus Fig. 9 ersichtlich ist weist der torische gummielastische Körper 310 einen längsverlaufenden Hohlraum 320 auf. Der gummielastische Körper 310 ist etwa in einer Radialebene 322 geteilt, wobei die beiden Teile 324 und 326 durch Verkleben o. dgl. miteinander verbunden sind. Dabei sind die Stirnflächen 328 der beiden Teile 324 und 326 zueinander komplementär profiliert. In den gummielastischen Körper 310 ist eine Gewindebuchse 330 einvulkanisiert, in welche ein Ventil zur Erzeugung eines Überdrucks im Hohlraum 320 einschraubbar ist. Es können auch mehrere Buchsen längs des Umfangs verteilt vorgesehen werden, um den Hohlraum zu belüften und Wärme abzuführen.

Wie aus Fig. 10 erkennbar ist, weist der in seiner Grundform torische gummielastische Körper 310 auf seiner Außen- und auf seiner Innenseite zwischen den Stützkörpern 316 bzw. 312 keilförmige radiale Ausnehmungen 332 bzw. 334 auf.

Die inneren Stützkörper 312 sind im Querschnitt, d. h. in einem Schnitt längs einer Radialebene, V-förmig. In dem ringförmigen ersten Kupplungsglied 300 sind Paare von radialen Schraubbolzen 336, 338 mit Muttern 340 bzw. 342 in axialem Abstand voneinander angeordnet. Jeweils ein erstes flexibles Element 314 in Gestalt eines endlosen Seils ist auf beiden Seiten mit einer Befestigungsschlaufe 344 bzw. 346 um einen der Schraubbolzen 336 bzw. 338 herumgeführt und verläuft mit den parallel zueinander verlaufenden mittleren Seilabschnitten 348, 350 in der durch den V-förmigen Querschnitt des Stützkörpers 312 gebildeten Vertiefung. Die äußeren Stützkörper 316 sind zylinderabschnittförmige Blechteile, die an ihren Rändern axiale, U-förmige Einprägungen 352, 354 aufweisen. An dem inneren Kupplungsglied 304 sitzen auf gegenüberliegenden Seiten axiale Schraubbolzen 356, 358. Das zweite flexible Element 318 in Gestalt ebenfalls eines endlosen Seils ist auf beiden Seiten mit einer Befestigungsschlaufe 360 bzw. 362 um einen der axialen Schraubbolzen 356, 358 herumgeführt, läuft mit den an die Befestigungsschlaufe 360 bzw. 362 anschließenden Seilabschnitten 364, 366 V-förmig auseinander und liegt mit den im Abstand parallel zueinander verlaufenden mittleren Seilabschnitten 368, 370 in den U-förmigen Einprägungen 352, 354.

Die Befestigungsschlaufen 344, 346 der ersten flexiblen Elemente sind zwischen den Muttern 340, 342 und ringförmigen Abstandsstücken 372 eingeklemmt, die auf den Schraubbolzen 336 und 338 sitzen.

Der torische, gummielastische Körper 310 ist, wie aus Fig. 10 ersichtlich ist, längs der Trennfläche 374 geteilt. Es ist daher möglich, nach Lösen der Muttern 342 und der Schrauben 358 die flexiblen Elemente 314 und 318 auf der rechten Seite in Fig. 9 zurückzuschlagen und das Zwischenglied 308 nach rechts herauszuziehen. Da das Zwischenglied dann längs der Trennflächen 374 auseinandergenommen werden kann, kann auf diese Weise das Zwischenglied 308 demontiert und durch ein anderes ersetzt werden, ohne daß die übrigen Teile der Kupplung oder die Welle demontiert werden müßten.

Der Hohlraum 320 und die keilförmigen Ausnehmungen 332 und 334 gestatten eine elastische Deformation des gummielastischen Körpers 310, so daß Drehmomente weich übertragen werden können. Über die Gewindebuchsen 330 kann außerdem eine Luftzirkulation durch den Hohlraum 320 zum Abführen von Wärme hervorgerufen werden.

**Patentansprüche:**

1. Kupplung zur schwingungshemmenden Übertragung von Drehmomenten, enthaltend
ein erstes Kupplungsglied,
ein dazu gleichachsiges zweites Kupplungsglied,
wenigstens ein als gesonderter Bauteil ausgebildetes elastisch verformbares Zwischenglied, über welches die Kupplungsglieder miteinander verbunden sind, und
Verbindungsmittel, welche flexible Elemente enthalten, mit den Kupplungsgliedern verbunden und in Schlaufen um das Zwischenglied herumgeführt sind, welche das Zwischenglied formschlüssig so halten, daß sie bei einer relativen Winkelbewegung der Kupplungsglieder das Zwischenglied durch Druckbelastung elastisch verformen,
dadurch gekennzeichnet, daß
das Zwischenglied mit Abstand zu jedem der Kupplungsglieder zwischen den Kupplungsgliedern angeordnet ist und
die Verbindungsmittel in einer das Zwischenglied formschlüssig und lösbar zwischen den Schlaufen haltenden Weise zu dem Zwischenglied angeordnet sind.

2. Kupplung nach Anspruch 1, dadurch gekennzeichnet,
daß das Zwischenglied torische Grundform besitzt,
daß die flexiblen Elemente der Verbindungsmittel jeweils an einem Ende mit dem ersten und an dem anderen Ende mit dem zweiten Kupplungsglied verbunden sind und
daß die Schlaufe der flexiblen Elemente teils auf der einen und teils auf der anderen Seite um das Zwischenglied herumgeführt sind.

3. Kupplung nach Anspruch 2, dadurch gekennzeichnet,
daß die Kupplungsglieder (10, 12) ringförmige Teile (10, 16) mit je zwei radialen Stirnflächen (18, 20; 22, 24) auf gegenüberliegenden Seiten aufweisen und
daß jedes der flexiblen Elemente (28, 30) auf je einer der Stirnflächen (20, 24 bzw. 18, 22) an jedem der Kupplungsglieder (10, 12) befestigt und jeweils auf der diesen Stirnflächen abgewandten Seite um das Zwischenglied (26) herumgeführt ist.

4. Kupplung nach Anspruch 1, dadurch gekennzeichnet, daß beiderseits des Zwischengliedes (26; 68) an den von den flexiblen Elementen (28, 30; 78, 80) umschlungenen Flächenteilen schalenförmige Stützkörper (50, 52; 98, 100) im Abstand voneinander angeordnet sind, wobei die auf der einen Seite vorgesehenen Stützkörper (50, 98) auf Lücke zu den auf der anderen Seite vorgesehenen Stützkörpern (52, 100) angeordnet sind und die flexiblen Elemente (28, 30; 78, 80) auf den Außenseiten der Stützkörper anliegen.

5. Kupplung nach Anspruch 4, dadurch gekennzeichnet, daß die flexiblen Elemente (78, 80) an den Stützkörpern (98, 100) durch lösbare Klemmvorrichtungen (102, 104, 106) festgeklemmt sind.

6. Kupplung nach Anspruch 2, dadurch gekennzeichnet, daß das Zwischenglied (26) von einem massiven gummielastischen Körper gebildet wird.

7. Kupplung nach Anspruch 1, dadurch gekennzeichnet, daß die Schlaufen der Verbindungsmittel mit beiden Enden teils nur an dem ersten und teils nur an dem zweiten Kupplungsglied befestigt sind.

8. Kupplung nach Anspruch 7, dadurch gekennzeichnet, daß die Verbindungsmittel schalenartige Stützkörper (144, 146; 258, 260; 312, 316) enthalten, welche auf der dem zugehörigen Kupplungsglied (110, 112; 236, 238; 300, 304) abgewandten Seite an dem Zwischenglied (136; 254; 308) anliegen und über die flexiblen Elemente (140, 142; 262, 264, 290, 292; 314, 318) mit dem Kupplungsglied verbunden sind, wobei die Stützkörper und die flexiblen Elemente jeweils eine das Zwischenglied umgreifende Schlaufe bilden.

9. Kupplung nach Anspruch 8, dadurch gekennzeichnet, daß die flexiblen Elemente (140, 142; 314, 318) jeweils an beiden Enden an dem zugehörigen Kupplungsglied (110, 112; 300, 304) angebracht und schlaufenartig um die Außenseite des zugehörigen schalenförmigen Stützkörpers (144, 146; 312, 316) herumgeführt sind.

10. Kupplung nach Anspruch 8, dadurch gekennzeichnet, daß die flexiblen Elemente (262, 264; 290, 292) jeweils einerseits an dem Kupplungsglied (236, 238) und andererseits an dem Stützkörper (258, 260) befestigt sind.

11. Kupplung nach Anspruch 1, dadurch gekennzeichnet, daß jedes der flexiblen Elemente (28, 30; 78, 80; 140, 142; 262, 264, 290, 292) ein endloses Seil enthält, das flach zu zwei parallelen Abschnitten (148, 150; 266, 268) zusammengelegt ist und an den beiden so entstehenden Enden je eine Befestigungsschlaufe (32, 34, 36, 38; 82, 86, 88; 152, 154; 170, 172) bildet.

12. Kupplung nach Anspruch 8, dadurch gekennzeichnet,
daß das Zwischenglied (136, 308) einen im wesentlichen torischen gummielastischen Körper (138, 310) aufweist, der zwischen einem ringförmigen, äußeren ersten Kupplungsglied (110; 300) und einem inneren zweiten Kupplungsglied (112; 304) angeordnet ist,
daß die mit dem ersten Kupplungsglied (110; 300) über die flexiblen Elemente (140; 314) verbundenen Stützkörper (144; 312) im Abstand voneinander auf der Innenseite des gummielastischen Körpers (138; 310) angeordnet sind,
daß die mit dem zweiten Kupplungsglied (112; 304) über die flexiblen Elemente (142; 318) verbundenen Stützkörper (146; 316) im Abstand voneinander und auf Lücke zu den mit dem ersten Kupplungsglied (110; 300) verbundenen Stützkörpern (144; 312) auf der Außenseite des gummielastischen Körpers (138, 310) angeordnet sind und
daß die mit dem ersten Kupplungsglied (110; 300) verbundenen flexiblen Elemente (140; 314) und die mit dem zweiten Kupplungsglied (112; 304) verbundenen flexiblen Elemente (142; 318) sich in Umfangsrichtung abwechseln.

13. Kupplung nach Anspruch 2, dadurch gekennzeichnet, daß das Zwischenglied (26, 68; 308) wenigstens an einer Stelle (274) seines Umfangs geteilt ist.

14. Kupplung nach Anspruch 7, dadurch gekennzeichnet, daß zwischen dem ringförmigen, äußeren ersten Kupplungsglied (236) und dem inneren zweiten Kupplungsglied (238) in Umfangsrichtung gleichmäßig verteilt und im Abstand voneinander mehrere je einem gummielastischen Körper (256) aufweisende Zwischenglieder (254) angeordnet sind von denen jedes über im Abstand voneinander angeordnete erste, flexible Elemente (262, 264) mit dem äußeren, ersten Kupplungsglied (236) und über wenigstens ein dazwischen angeordnetes zweites flexibles Element (290, 292) mit dem zweiten Kupplungsglied (238) verbunden ist.

15. Kupplung nach Anspruch 14, dadurch gekennzeichnet,
daß an dem gummielastischen Körper (256) auf der Außenseite und auf der Innenseite je ein schalenförmiger Stützkörper (258, 260) anliegt,
daß der innere Stützkörper (260) in seinen Endbereichen über je ein Paar an gegenüberliegenden Seiten des Stützkörpers (260) befestigter flexiblen Elements (262, 264) mit dem ringförmigen ersten Kupplungsglied (236) verbunden ist und
daß der äußere Stützkörper (258) dazwischen in seinem mittleren Bereich über ein weiteres Paar an gegenüberliegenden Seiten des Stützkörpers (258) befestigter flexibler Elemente (290, 292) mit dem inneren zweiten Kupplungsglied (238) verbunden ist.

16. Kupplung nach Anspruch 15, dadurch gekennzeichnet, daß der gummielastische Körper (256) Hohlräume (294, 296) aufweist.

17. Kupplung nach Anspruch 1, dadurch gekennzeichnet, daß das Zwischenglied einen gummielastischen Körper (26, 68, 310) aufweist, der einen in Umfangsrichtung verlaufenden Hohlraum (56, 70, 320) aufweist.

18. Kupplung nach Anspruch 17, dadurch gekennzeichnet, daß in den gummielastischen Körper (310) mindestens eine Gewindebuchse (330) einvulkanisiert ist, in welche ein Ventil zur Erzeugung eines Überdrucks im Hohlraum einschraubbar ist.

19. Kupplung nach Anspruch 2 oder 17, dadurch gekennzeichnet, daß der gummielastische Körper (68, 310) etwa in einer Radialebene (72, 222) geteilt ist, wobei die beiden Teile (74, 76, 324, 326) durch Verkleben o. dgl. miteinander verbunden sind.

20. Kupplung nach Anspruch 19, dadurch gekennzeichnet, daß die Stirnflächen (328) der beiden Teile (324, 326) zueinander komplementär profiliert sind.

21. Kupplung nach einem der Ansprüche 17 bis 20, dadurch gekennzeichnet, daß der in seiner Grundform torische gummielastische Körper (310) auf seiner Außen- und seiner Innenseite zwischen den Stützkörpern (312, 316) keilförmige radiale Ausnehmungen (332, 334) aufweist.

22. Kupplung nach einem der Ansprüche 17 bis 21, dadurch gekennzeichnet,
daß die inneren Stützkörper (312) im Querschnitt längs einer Radialebene V-förmig sind,
daß in dem ringförmigen ersten Kupplungsglied Paare von radialen Schraubbolzen (336, 338) mit Muttern (340, 342) in axialem Abstand voneinander angeordnet sind,
das erste flexible Element (314) in Gestalt je eines endlosen Seils auf beiden Seiten mit einer Befestigungsschlaufe (344, 346) um einen der Schraubbolzen (336, 338) herumgeführt sind und mit den parallel zueinander verlaufenden mittleren Seilabschnitten (348, 350) in der durch den V-förmigen Querschnitt der Stützkörper (312) gebildeten Vertiefung verlaufen,
daß die äußeren Stützkörper (316) zylinderabschnittförmige Blechteile sind, die an ihren Rändern axiale, U-förmige Einprägungen (352, 354) aufweisen,

daß an dem inneren Kupplungsglied (304) auf gegenüberliegenden Seiten Paare von axialen Schraubbolzen (356, 358) sitzen und

daß zweite flexible Elemente (318) in Gestalt je eines endlosen Seils auf beiden Seiten mit einer Befestigungsschlaufe (360, 362) um einen der axialen Schraubbolzen (356, 358) herumgeführt sind, mit den an die Befestigungsschlaufen (360, 362) anschließenden Seilabschnitten (364, 366) V-förmig auseinanderlaufen und mit den im Abstand parallel zueinander verlaufenden mittleren Seilabschnitten (368, 370) in den U-förmigen Einprägungen (352, 354) liegen.

## Claims

1. A coupling for the oscillation-inhibiting transmission of moments of rotation, including
a first coupling member,
a second coupling member which is coaxial therewith,
at least one resiliently deformable intermediate member which is formed as a separate component and by means of which the coupling members are connected together, and
connecting means which include flexible elements and which are connected to the coupling members and which are passed around the intermediate member in loops which positively hold the intermediate member in such a way that they resiliently deform the intermediate member by a compression loading upon relative angular movement of the coupling members,
characterised in that
the intermediate member is arranged at a spacing from each of the coupling members between the coupling members, and
the connecting means are arranged relative to the intermediate member in a manner whereby the intermediate member is positively and releasably held between the loops.

2. A coupling according to Claim 1 characterised in that the intermediate member is of toric basic form, that the flexible elements of the connecting means are each connected at one end to the first coupling member and at the other end to the second coupling member, and that the loops of the flexible elements are passed around the intermediate member partly on one side and partly on the other side.

3. A coupling according to Claim 2 characterised in that the coupling members (10, 12) have annular portions (10, 16) each having two radial end surfaces (18, 20; 22, 24) on oppositely disposed sides, and that each of the flexible elements (28, 30) is secured to a respective one of the end surfaces (20, 24 and 18, 22 respectively) on each of the coupling members (10, 12) and is passed around the intermediate member (26) on the side remote from said respective end surfaces.

4. A coupling according to Claim 1 characterised in that shell-like support members (50, 52; 98, 100) are arranged at a spacing from each other on both sides of the intermediate member (26; 68) at the surface portions around which the flexible elements (28, 30; 78, 80) are passed, wherein the support members (50, 98) on one side are arranged on gaps relative to the support members (52, 100) on the other side, and the flexible elements (28, 30; 78, 80) lie against the outsides of the support members.

5. A coupling according to Claim 4 characterised in that the flexible elements (78, 80) are clamped fast to the support members (98, 100) by releasable clamp means (102, 104, 106).

6. A coupling according to Claim 2 characterised in that the intermediate member (26) is formed by a solid rubber member.

7. A coupling according to Claim 1 characterised in that the loops of the connecting means are secured with both ends in part only to the first coupling member and in part only to the second coupling member.

8. A coupling according to Claim 7 characterised in that the connecting means include shell-like support members (144, 146; 258, 260; 312, 316) which lie against the intermediate member (136; 254; 308) on the side which is remote from the associated coupling member (110, 112; 236, 238; 300, 304) and are connected to the coupling member by way of the flexible elements (140, 142; 262, 264; 290, 292; 314, 318), wherein the support members and the flexible elements form a respective loop engaging around the intermediate member.

9. A coupling according to Claim 8 characterised in that the flexible elements (140, 142; 314, 318) are respectively mounted at both ends to the associated coupling member (110, 112; 300, 304) and are passed in a loop-like configuration around the outside of the associated shell-like support member (144, 146; 312, 316).

10. A coupling according to Claim 8 characterised in that the flexible elements (262, 264; 290, 292) are respectively secured on one hand to the coupling member (236, 238) and on the other hand to the support member (258, 260).

11. A coupling according to Claim 1 characterised in that each of the flexible elements (28, 30; 78, 80; 140, 142; 262, 264, 290, 292) includes an endless cable which is laid together flat to form two parallel portions (148, 150; 266, 268) and forms a respective fixing loop (32, 34, 36, 38; 82, 86, 88; 152, 154; 170, 172) at each of the two ends formed by the parallel portions.

12. A coupling according to Claim 8 characterised in that the intermediate member (136, 308) has a substantially toric rubber member (138, 310) which is arranged between an annular outer first coupling member (110; 300) and an inner second coupling member (112; 304), that the support members (144; 312) which are connected to the first coupling member (110; 300) by way of the flexible elements (140; 314) are arranged at a spacing from each other on the inside of the rubber member (138; 310), that the support members (146; 316) which are connected to the second coupling member (112, 304) by way of the flexible elements (142; 318) are arranged at a spacing from each other and on gaps relative to the support members (144; 312) connected to the first coupling member (110; 300), on the outside of the rubber member (138, 310), and that the flexible elements (140; 314) which are connected to the first coupling member (110; 300) and the flexible elements (142; 318) which are connected to the second coupling member (112; 304) alternate in the peripheral direction.

13. A coupling according to Claim 2 characterised in that the intermediate member (26, 68; 308) is divided at least at one point (274) of its periphery.

14. A coupling according to Claim 7 characterised in that a plurality of intermediate members (254) each having a respective rubber member (256) are arranged between the annular outer first coupling member (236) and the inner second coupling member (238), being spaced from each other and distributed uniformly in the peripheral direction, each of which intermediate members is connected to the outer first coupling member (236) by way of spaced-apart first flexible elements (262, 264) and to the second coupling member (238) by way of at least one interposed second flexible element (290, 292).

15. A coupling according to Claim 14 characterised in that a respective shell-like support member (258, 260) lies against the rubber member (256) on the outside and on the inside, that, in its end regions, the inner support member (260) is connected to the annular first coupling member (236) by way of a respective pair of flexible elements (262, 264) secured to opposite sides of the support member (260), that the outer support member (258) therebetween is connected in its middle region to the inner second coupling member (238) by way of a further pair of flexible elements (290, 292) secured to opposite sides of the support member (258).

16. A coupling according to Claim 15 characterised in that the rubber member (256) has hollow spaces (294, 296).

17. A coupling according to Claim 1 characterised in that the intermediate member has a rubber member (26, 68, 310) which has a hollow space (56, 70, 320) extending in the peripheral direction.

18. A coupling according to Claim 17 characterised in that at least one screwthreaded bush (330) is vulcanised into the rubber member (310), and a valve can be screwed into the bush to produce an increased pressure in the hollow space.

19. A coupling according to Claim 2 or Claim 17 characterised in that the rubber member (68, 310) is divided substantially in a radial plane (72, 222), the two parts (74, 76, 324, 326) being connected together by adhesive or the like.

20. A coupling according to Claim 19 characterised in that the end surfaces (328) of the two parts (324, 326) are complementary to each other in respect of their profile.

21. A coupling according to one of Claims 17 to 20 characterised in that the rubber member (310) which is of toric basic shape has wedge-shaped radial recesses (332, 334) on its outside and its inside between the support members (312, 316).

22. A coupling according to one of Claims 17 to 21 characterised in that the inner support members (312) are of V-shaped configuration in cross-section along a radial plane, that pairs of radial screw bolts (336, 338) with nuts (340, 342) are arranged at axial spacings from each other in the annular first coupling member, that the first flexible element (314) are passed in the form of a respective endless cable on both sides with a fixing loop (344, 346) around one of the two screw bolts (336, 338) and extend with the middle cable portion (348, 350), which extend parallel relative to each other, in the recess formed by the V-shaped cross-section of the support members (312), that the outer support members (316) are sheet metal members in the form of cylinder portions, which have axial U-shaped impressions (352, 354) at their edges, that pairs of axial screw bolts (356, 358) are carried on the inner coupling member (304) on opposite sides, and that second flexible elements (318) are passed in the form of a respective endless cable on both sides with a fixing loop (360, 362) around one of the axial screw bolts (356, 358), diverge in a V-shape with the cable portions (364, 366) adjoining the fixing loops (360, 362) and lie in the U-shaped impressions (352, 354) with the central cable portions (368, 370) which extend parallel and at a spacing from each other.

## Revendications

1. Accouplement servant à transmettre des couples en empêchant les oscillations, comprenant:
un premier organe d'accouplement,
un second organe d'accouplement sur le même axe,
au moins un organe intermédiaire élastiquement déformable formant une pièce séparée, par l'intermédiaire duquel lesdits organes d'accouplement sont reliés l'un à l'autre, et
des moyens de jonction qui contiennent des éléments flexibles, sont reliés aux organes d'accouplement précités et guidés en forme de boucles autour de l'organe intermédiaire pour retenir ce dernier par assemblage de forme de telle manière que lors d'un mouvement angulaire relatif des deux organes d'accouplement, ledit organe intermédiaire soit déformé élastiquement par une charge de compression, caractérisé en ce que l'organe d'accouplement est disposé à un certain écartement de chacun des organes d'accouplement et entre ces derniers et en ce que les moyens de jonction sont disposés par rapport à l'organe intermédiaire de manière à retenir ce dernier par assemblage de forme et de façon amovible entre lesdites boucles.

2. Accouplement selon la revendication 1, caractérisé en ce que l'organe intermédiaire présente une forme de base torique, que les éléments flexibles des moyens de jonction précités sont reliés respectivement par une extrémité au premier organe d'accouplement et par une autre extrémité au second organe d'accouplement précité, et en ce que les boucles des éléments flexibles sont passées autour de l'organe intermédiaire en partie sur un côté et en partie sur l'autre côté.

3. Accouplement selon la revendication 2, caractérisé en ce que les organes d'accouplement (10, 12) comprennent des pièces annulaires (10, 16) avec respectivement deux surfaces frontales radiales sur leurs côtés opposés, et en ce que chacun des éléments flexibles (38, 30) est fixé à l'un des organes d'accouplement (10, 12) sur respectivement l'une des surfaces frontales (20, 24 ou 18, 22) en étant guidé autour dudit organe intermédiaire (26) sur le côté qui est opposé auxdites surfaces frontales.

4. Accouplement selon la revendication 1, caractérisé en ce que de chaque côté de l'organe intermédiaire (26, 68) sur les parties de surface entourées par les éléments flexibles (28, 30, 78, 80) sont disposés à un écartement les uns des autres des corps d'appui (50, 52, 98, 100) en forme de coquilles, les corps d'appui (50, 98) prévus sur le premier côté en étant décalés sur les intervalles des corps d'appui prévus de l'autre côté tandis que les éléments flexibles (28, 30, 78, 80) viennent s'appliquer contre la face extérieure des corps d'appui.

5. Accouplement selon la revendication 4, caractérisé en ce que les éléments flexibles (78, 80) sont retenus sur les corps d'appui (98, 100) à l'aide de dispositifs d'attache amovibles (102, 104, 106).

6. Accouplement selon la revendication 2, caractérisé en ce que l'organe intermédiaire (26) est formé par un corps massif élastique du type en caoutchouc.

7. Accouplement selon la revendication 1, caractérisé en ce que les boucles des moyens de jonction sont fixées à leurs extrémités en partie uniquement sur le premier organe d'accouplement et en partie uniquement sur le second.

8. Accouplement selon la revendication 7, caractérisé en ce que les moyens de jonction précités comprennent des corps d'appui en forme de coquilles (144, 146, 258, 260, 312, 316) qui viennent s'appliquer sur le côté opposé à l'organe d'accouplement associé (110, 112, 236, 238, 300, 304) contre ledit organe intermédiaire (136, 254, 308) et qui sont reliés par l'intermédiaire des éléments flexibles (140, 142, 262, 264, 290, 292, 314, 318) à l'organe d'accouplement associé, lesdits corps d'appui et les éléments flexibles formant respectivement une boucle entourant l'organe intermédiaire précité.

9. Accouplement selon la revendication 8, caractérisé en ce que les éléments flexibles (140, 142, 314, 318) sont disposés respectivement au niveau de leurs extrémités, contre l'organe d'accouplement associé (110, 112, 300, 304) et entourent à la manière de boucles la partie extérieure du corps d'appui en forme de coque associé (144, 146, 312, 316).

10. Accouplement selon la revendication 8, caractérisé en ce que les éléments flexibles (262, 264, 290, 292) sont fixés respectivement sur un côté à l'organe d'accouplement (236, 238) et de l'autre côté, au corps d'appui (258, 260).

11. Accouplement selon la revendication 1, caractérisé en ce que chacun des éléments flexibles (28, 30, 78, 80, 140, 142, 262, 264, 290, 292) comprend un câble sans fin qui est passé à plat en deux portions parallèles (148, 150, 266, 268) et forme à ses deux extrémités ainsi formées, respectivement une boucle de fixation (32, 34, 36, 38, 82, 86, 88, 152, 154, 170, 172).

12. Accouplement selon la revendication 8, caractérisé en ce que l'organe intermédiaire (136, 138) comprend un corps élastique du type en caoutchouc sensiblement torique (138, 310) qui est disposé entre un premier organe d'accouplement extérieur de forme annulaire (110, 300) et un second organe d'accouplement intérieur (112, 304),

en ce que les corps d'appui reliés au premier organe d'accouplement (110, 300) par l'intermédiaire des éléments flexibles (140, 314) sont disposés à un certain écartement les uns des autres, sur la face interne du corps élastique (138, 310),

en ce que les corps d'appui (146, 316) reliés au second organe d'accouplement (112, 304) par l'intermédiaire des éléments flexibles (142, 318) sont disposés à un certain écartement les uns des autres et en étant décalés sur les intervalles laissés entre les corps d'appui (144, 312), reliés audit premier organe d'accouplement (110, 300), sur la face extérieure dudit corps élastique du type en caoutchouc (138, 310), et

en ce que les éléments flexibles (140, 314) reliés au premier organe d'accouplement (110, 300) et les éléments flexibles (142, 318) reliés au second organe d'accouplement (112, 304) sont disposés en étant alternés en direction périphérique.

13. Accouplement selon la revendication 2, caractérisé en ce que l'organe intermédiaire (26, 68, 308) est divisé au moins en un emplacement (274) de sa périphérie.

14. Accouplement selon la revendication 7, caractérisé en ce qu'entre le premier organe d'accouplement externe (236) de forme annulaire et le second organe d'accouplement interne (238) sont prévus, à un certain écartement les uns des autres et régulièrement répartis en direction périphérique, plusieurs organes intermédiaires (254) présentant chacun un corps élastique du type en caoutchouc (256) qui, par des premiers éléments flexibles (262, 264) disposés à un certain écartement les uns des autres, sont reliés au premier organe d'accouplement externe (236) et, par l'intermédiaire d'au moins un second élément flexible interposé (290, 292), au second organe d'accouplement (238).

15. Accouplement selon la revendication 14, caractérisé en ce que sur le corps élastique du type en caoutchouc (256) vient s'appliquer, sur la face externe et sur la face interne, respectivement un corps d'appui (258, 260) en forme de coque,

en ce que le corps d'appui intérieur (260) est relié au niveau de ses extrémités, par l'intermédiaire de respectivement une paire d'éléments flexibles (262, 264) fixés sur les côtés opposés du corps d'appui précité (260), au premier organe d'accouplement annulaire (236), et

en ce que le corps d'appui extérieur (258) est relié dans l'intervalle, par sa partie médiane, par l'intermédiaire d'une autre paire d'éléments flexibles (290, 292), fixés sur les côtés opposés du corps d'appui (238), au second organe d'accouplement interne (238).

16. Accouplement selon la revendication 15, caractérisé en ce que le corps élastique du type en caoutchouc (256) présente des cavités (294, 296).

17. Accouplement selon la revendication 1, caractérisé en ce que l'organe intermédiaire comprend un corps élastique du type en caoutchouc (26, 68, 310) qui présente une cavité (56, 70, 320) s'étendant dans sa direction périphérique.

18. Accouplement selon la revendication 17, caractérisé en ce que dans le corps élastique (310) est vulcanisé au moins un manchon fileté (330) dans lequel peut être vissée une soupape pour produiere une surpression dans ladite cavité.

19. Accouplement selon la revendication 2 ou 7, caractérisé en ce que le corps élastique du type en caoutchouc (68, 70) est divisé sensiblement dans un plan radial (72, 222), les deux parties ainsi formées (74, 76, 324, 326) étant assemblées l'une à l'autre par collage ou analogue.

20. Accouplement selon la revendication 19, caractérisé en ce que les surfaces frontales (328) des deux parties (324, 326) sont profilées de manière à être complémentaires l'une de l'autre.

21. Accouplement selon l'une des revendications 17 à 20, caractérisé en ce que le corps élastique (310) de forme torique présente sur son côté extérieur et sur son côté intérieur, entre les corps d'appui (312, 316), des évidements en forme de coin orientés radialement (332, 334).

22. Accouplement selon l'une des revendications 17 à 21, caractérisé en ce que les corps d'appui internes (312) présentent en section transversale, le long d'un plan radial, une forme de V,

en ce que dans le premier organe d'accouplement de forme annulaire sont prévues des paires de boulons vissés orientés radialement (336, 338) avec des écrous (340, 342), en étant éloignés axialement,

en ce que des premiers éléments flexibles (314) réalisés sous forme d'un câble sans fin sont guidés autour de l'un des boulons vissés (336, 338) des deux côtés, par une boucle de fixation (344, 346) et s'étendent par les portions de câble du milieu respectivement parallèles les unes aux autres (348, 350) dans la cavité formée par la section transversale en forme de V du corps d'appui (312),

en ce que les corps d'appui extérieurs (316) sont formés de découpes de tôle en forme de parties de cylindre qui présentent sur leurs bords, des parties axiales embouties en forme de U (352, 354),

en ce que sur l'organe d'accouplement interne (304), sur les côtés respectivement en vis-à-vis, sont prévues des paires de boulons vissés orientés axialement (356, 358), et

en ce que des seconds éléments flexibles (318), réalisés chacun sous forme d'un câble sans fin, sont guidés sur les deux côtés, par une boucle de fixation (360, 362), autour de l'un des boulons orientés axialement (356, 358), en ce qu'ils divergent en forme de V par leurs portions de câble (364, 366) qui se rattachent auxdites boucles de fixation (360, 362), et qu'ils viennent s'appliquer par les portions médianes de câble s'étendant parallèlement à un certain écartement les unes des autres (368, 370), dans les parties embouties en forme de U (352, 354).

*Fig. 1*

FIG.2

0 003 533

# FIG. 3

FIG. 4

0 003 533

Fig.5

FIG. 6

Fig.7

Fig.8

# FIG. 9

FIG. 10